# FASCICULE DE BREVET EUROPEEN

(11) **EP 3 312 260 B1**
(45) Date de publication et mention de la délivrance du brevet: **27.03.2019**
(21) Numéro de dépôt: 17306234.0
(22) Date de dépôt: 21.09.2017
(51) Int. Cl.: C10G 45/02, C10G 49/22, C10G 65/02, C10G 45/32, C10G 65/00, C10G 65/16, C10L 1/06

(54) **PROCEDE D'HYDRODESULFURATION D'UNE ESSENCE OLEFINIQUE**
VERFAHREN ZUR HYDROENTSCHWEFELUNG EINER OLEFINISCHEN ESSENZ
METHOD FOR HYDRODESULPHURISATION OF OLEFINIC GASOLINE

(30) Priorité: 19.10.2016 FR 1660159
(43) Date de publication de la demande: 25.04.2018
(73) Titulaire: IFP Energies nouvelles, 92852 Rueil-Malmaison Cedex (FR)
(72) Inventeur: GOMEZ, Adrien, 69003 LYON (FR); LEFLAIVE, Philibert, 69780 MIONS (FR); LOPEZ GARCIA, Clémentina, 69540 IRIGNY (FR); PUCCI, Annick, 78290 CROISSY SUR SEINE (FR); GODARD-PITHON, Marie, 92500 RUEIL MALMAISON (FR); NOCCA, Jean-Luc, 92500 RUEIL-MALMAISON (FR); ZHANG, Guobing, Chaoyang District, Beijing 100125 (CN)
(74) Mandataire: IFP Energies nouvelles

(56) Documents cités:
- EP-A1- 1 138 749
- EP-A1- 2 816 094
- US-A1- 2003 116 474
- US-A1- 2004 188 327
- US-A1- 2014 054 198
- US-B1- 6 927 314

## Description

La présente invention concerne un procédé pour réduire la teneur en composés soufrés d'une essence de type oléfinique, de manière à produire une essence dite désulfurée, tout en limitant la perte d'octane induite par l'hydrogénation des oléfines.

### Etat de la technique

La production d'essences répondant aux nouvelles normes d'environnement nécessite que l'on diminue de façon importante leur teneur en soufre à des valeurs n'excédant généralement pas 50 ppm (mg/kg), et préférentiellement inférieures à 10 ppm.
Il est par ailleurs connu que les essences de conversion, et plus particulièrement celles provenant du craquage catalytique, qui peuvent représenter 30 à 50% du pool essence, présentent des teneurs élevées en oléfines et en soufre.
Le soufre présent dans les essences est pour cette raison imputable, à près de 90%, aux essences issues des procédés de craquage catalytique, qu'on appellera dans la suite essence de FCC (Fluid Catalytic Cracking selon la terminologie anglo-saxonne, que l'on peut traduire par craquage catalytique en lit fluidisé). Les essences de FCC constituent donc la charge préférée du procédé de la présente invention.
Parmi les voies possibles pour produire des carburants à faible teneur en soufre, celle qui a été très largement retenue consiste à traiter spécifiquement les bases essences riches en soufre par des procédés d'hydrodésulfuration en présence d'hydrogène et d'un catalyseur. Les procédés traditionnels désulfurent les essences de manière non sélective en hydrogénant une grande partie des mono-oléfines, ce qui engendre une forte perte en indice d'octane et une forte consommation d'hydrogène. Les procédés les plus récents, tels que le procédé Prime G+ (marque commerciale), permettent de désulfurer les essences de craquage riches en oléfines, tout en limitant l'hydrogénation des mono-oléfines et par conséquent la perte d'octane et la forte consommation d'hydrogène qui en résulte. De tels procédés sont par exemple décrits dans les demandes de brevet EP 1077247 et EP 1174485.
Comme décrit dans les demandes de brevet EP 1077247 et EP 1800748, il est avantageux de réaliser avant l'étape d'hydrotraitement une étape d'hydrogénation sélective de la charge à traiter. Cette première étape d'hydrogénation consiste essentiellement à hydrogéner sélectivement les dioléfines, tout en transformant conjointement par alourdissement les composés soufrés légers saturés (par augmentation de leur poids moléculaire). Ces composés soufrés peuvent avoir un point d'ébullition inférieur au point d'ébullition du thiophène, tels que le méthanethiol, l'éthanethiol, le propanethiol et le diméthylsulfure. Par fractionnement de l'essence issue de l'étape d'hydrogénation sélective, on produit une coupe essence désulfurée légère (ou LCN pour Light Cracked Naphtha selon la terminologie anglo-saxonne) composée majoritairement de mono-oléfines à 5 ou 6 atomes de carbone sans perte d'octane, qui peut être valorisée au pool essence pour la formulation de carburant pour véhicules. Dans des conditions opératoires spécifiques, cette hydrogénation réalise sélectivement l'hydrogénation, au moins partielle, voire totale, des dioléfines présentes dans la charge à traiter en composés mono-oléfiniques, qui possèdent un meilleur indice d'octane. Un autre effet de l'hydrogénation sélective est de prévenir la désactivation progressive du catalyseur d'hydrodésulfuration sélective et/ou d'éviter un bouchage progressif du réacteur dû à la formation de gommes de polymérisation à la surface des catalyseurs ou dans le réacteur. En effet, les composés polyinsaturés sont instables et ont tendance à former des gommes par polymérisation.
La demande de brevet EP 2161076 divulgue un procédé d'hydrogénation sélective des composés polyinsaturés, et plus particulièrement des dioléfines, permettant de réaliser conjointement l'alourdissement des composés soufrés légers comme les mercaptans ou les sulfures. Ce procédé met en oeuvre un catalyseur contenant au moins un métal du groupe VIb et au moins un métal non noble du groupe VIII déposés sur un support poreux.
L'obtention d'une essence à très basse teneur en soufre, typiquement à une teneur inférieure à 10 ppm poids telle que requise en Europe, requiert par ailleurs au moins une étape d'hydrodésulfuration qui consiste à convertir les composés organo-soufrés en H₂S. Cependant si cette étape n'est pas correctement contrôlée elle peut entraîner l'hydrogénation d'une partie importante des mono-oléfines présentes dans l'essence ayant alors pour conséquence une forte diminution de l'indice d'octane de l'essence ainsi qu'une surconsommation d'hydrogène. Un autre problème rencontré lors de l'étape d'hydrodésulfuration est la formation de composés de type mercaptans résultant de la réaction d'addition de l'H₂S formé dans le réacteur d'hydrodésulfuration sur les mono-oléfines présentes dans la charge essence. Les mercaptans cités, de formule chimique R-SH, où R est un groupement alkyle, sont également appelés thiols ou mercaptans de recombinaison et représentent généralement entre 20% et 80% poids du soufre résiduel dans les essences désulfurées.
Afin de limiter ces inconvénients, différentes solutions sont décrites dans la littérature pour désulfurer les essences de craquage à l'aide de combinaison d'étapes d'hydrodésulfuration et d'élimination des mercaptans de recombinaison par une technique judicieusement choisie pour éviter l'hydrogénation des mono-oléfines présentes, afin de préserver l'indice d'octane (voir par exemple US 7,799,210, US 6,960,291, US 6,387,249 et US 2007/114156) .
Il apparait cependant que si ces combinaisons mettant en oeuvre une étape finale d'élimination des mercaptans de recombinaison sont particulièrement adaptées lorsqu'une très basse teneur en soufre est recherchée, celles-ci peuvent se révéler très couteuses lorsque la quantité de mercaptans à éliminer est élevée; en effet cela nécessite par exemple de fortes consommations d'adsorbant ou de solvant.
Parmi les solutions proposées dans la littérature pour produire des essences à teneur en soufre réduite, certaines proposent la séparation par distillation de la coupe large de l'essence issue d'un procédé de craquage (ou FRCN pour Full Range Cracked Naphtha selon la terminologie anglo-saxonne). La distillation a comme objectif dans certains brevets (par exemple, les brevets EP 1077247 et WO 02/072738) d'obtenir 2 coupes : une coupe légère (LCN) et une coupe lourde (HCN ou Heavy Cracked Naphtha selon la terminologie anglo-saxonne). L'essence FRCN peut être traitée en amont de la distillation par exemple par un procédé permettant l'hydrogénation sélective des dioléfines de l'essence et/ou permettant l'alourdissement des composés soufrés légers, de telle sorte qu'après l'opération de distillation, ces composés soufrés soient récupérés dans la coupe lourde HCN. Les composés soufrés de la coupe lourde sont ensuite éliminés de l'essence par différents procédés, par exemple, via une hydrodésulfuration catalytique effectuée avec un ou plusieurs réacteurs.
Une autre solution consiste à réaliser l'hydrodésulfuration catalytique de la charge essence en deux étapes d'hydrodésulfuration avec une étape intermédiaire de séparation de l'H₂S formé dans la première étape. Une telle solution est illustrée par exemple dans les brevets EP 1174485 et US 7,785,461.
Des brevets portent également sur des solutions combinant la séparation en une coupe lourde et une coupe légère et une hydrodésulfuration catalytique effectuée avec deux réacteurs avec séparation de l'H₂S formé dans la première étape. Dans ce cas, la séparation de la coupe légère peut être réalisée soit en amont des deux étapes d'hydrodésulfuration tel qu'illustré dans le brevet EP 1354930, seule la coupe lourde étant alors désulfurée, soit entre les deux étapes d'hydrodésulfuration, la première étape traitant alors la coupe large de l'essence issue d'un procédé de craquage (ou FRCN pour Full Range Cracked Naphtha selon la terminologie anglo-saxonne), la seconde uniquement la coupe lourde. Des exemples de cette dernière solution sont illustrés notamment dans US 6,913,688 et US 7,419,586.
D'autres solutions mettent en oeuvre la séparation par distillation de l'essence coupe large FRCN en plus de deux coupes pour produire une essence à teneur en soufre réduite, voire, des très faible teneurs en soufre, de l'ordre de 10 ppm poids. Dans ce type de procédés, les coupes obtenues sont traitées séparément ou en partie ensemble pour l'élimination du soufre organique d'au moins une partie des coupes obtenues, le but étant d'obtenir une essence désulfurée après mélange de toutes ou au moins une partie des coupes traitées.
Par exemple, le document US 2004/188327 décrit un procédé qui permet de réduire la teneur en soufre d'une essence FCC en séparant l'essence FRCN par une opération de distillation en trois coupes: une coupe légère, une coupe intermédiaire et une coupe lourde. La coupe lourde est désulfurée et l'effluent est combiné avec la coupe intermédiaire, l'ensemble étant désulfuré lors d'une seconde étape d'hydrodésulfuration. Il est précisé que les mercaptans contenus dans la coupe légère peuvent être éliminés soit par thioéthérification en amont de la séparation en trois coupes, soit par un traitement caustique en aval.
Le brevet US 6,103,105 décrit un procédé similaire, l'essence FRCN (Full Range Cracked Naphtha) étant également séparée en trois coupes par une opération de distillation. Il est précisé que la coupe légère représente entre 50 et 80% de l'essence et que la coupe lourde représente de 5 à 20% de l'essence FRCN. Il est également précisé que la coupe intermédiaire et la coupe lourde sont hydrodésulfurées dans un unique réacteur contenant deux lits catalytiques. La coupe lourde est traitée dans le 1er lit catalytique et la coupe intermédiaire est ajoutée entre les deux lits de manière à réaliser un co-traitement avec la coupe lourde partiellement désulfurée issue du 1er lit dans le 2ème lit catalytique. Les auteurs indiquent une élimination presque totale du soufre ainsi qu'une hydrogénation quasi totale des oléfines de la coupe lourde.
Le brevet FR 2807061 décrit également un procédé de désulfuration d'essence comprenant une étape d'hydrogénation sélective suivie d'une séparation en au moins trois fractions. La fraction la plus légère est pratiquement exempte de soufre. La fraction la plus lourde est traitée au moins une fois pour désulfurer les composés soufrés insaturés de la coupe. La fraction intermédiaire est caractérisée par une teneur en oléfines et aromatiques relativement faible. Cette coupe subit en partie ou en totalité au moins une étape de désulfuration et de déazotation suivie d'un reformage catalytique.

Le brevet US 9,260,672 décrit un procédé pour production d'essence avec une faible perte d'indice d'octane. Selon les inventeurs, après saturation des dioléfines, l'essence FRCN est séparée par distillation en une coupe légère de point final 70°C, une coupe intermédiaire (70-90°C) et une coupe lourde (90-210°C). Les mercaptans de la coupe légère sont éliminés avec un traitement caustique dans un équipement connu sous le nom de CFC (ou Continuous Film Contactor selon la terminologie anglo-saxonne). La coupe lourde, contenant des composés soufrés principalement thiophéniques, est désulfurée par un procédé d'hydrodésulfuration catalytique ou d'adsorption réactive. La coupe intermédiaire peut être envoyée vers une unité d'isomérisation ou de reformage catalytique. Optionnellement la coupe intermédiaire peut être co-traitée avec la coupe légère dans un équipement CFC pour réduire la teneur en mercaptans, ou bien, cette coupe peut être co-traitée avec la coupe lourde. Ce procédé ne propose pas de traitement de désulfuration séparé pour la coupe intermédiaire.
La demande brevet US 2004/195151 divulgue un procédé de désulfuration sélective d'essence FRCN. L'essence FRCN est introduite dans une colonne de distillation réactive permettant à la fois de réaliser un traitement de thioéthérification des mercaptans contenus dans la charge et une séparation en une coupe légère, une coupe intermédiaire et une coupe lourde. La coupe intermédiaire est soutirée par un soutirage latéral et est traitée dans un réacteur de désulfuration.
La demande de brevet US 2014/054198 décrit un procédé pour réduire la teneur en soufre d'un flux d'hydrocarbures, le procédé comprenant la mise en contact d'une essence FRCN avec un catalyseur d'hydrogénation pour hydrogéner au moins une partie des diènes et convertir au moins une partie des mercaptans en thioéthers. Cette essence FRCN est ensuite fractionnée en une fraction légère, une fraction intermédiaire et une fraction lourde. La fraction lourde est désulfurée dans un procédé d'hydrodésulfuration catalytique. La fraction intermédiaire est mélangée avec de l'hydrogène et une coupe gazole pour former un mélange qui est mis en contact avec un catalyseur dans un réacteur d'hydrodésulfuration puis séparé afin d'obtenir la fraction intermédiaire désulfurée et récupérer la coupe gazole qui est recyclée dans le procédé et éventuellement purgée.

Un but de la présente invention est de proposer un procédé de désulfuration d'une essence oléfinique qui soit capable de produire, en limitant la perte d'indice d'octane, une essence à basse teneur en soufre total, typiquement inférieure à 30 ppm, ou encore préférentiellement inférieure à 15 ppm poids, voire inférieure à 10 ppm poids et également à faible teneur en mercaptans (de recombinaison).

### Résumé de l'invention

L'invention se rapporte à un procédé de traitement d'une essence contenant des composés soufrés, des oléfines et des dioléfines, comprenant les étapes suivantes:
a) on fractionne l'essence en au moins :
   - une coupe essence légère LCN;
   - une coupe essence intermédiaire MCN primaire; et
   - une coupe essence lourde HHCN primaire;
b) on désulfure la coupe essence intermédiaire MCN primaire seule et en présence d'un catalyseur d'hydrodésulfuration et de l'hydrogène, à une température comprise entre 160 et 450°C, à une pression comprise entre 0,5 et 8 MPa, avec une vitesse spatiale liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 50 Nm³/m³ et 1000 Nm³/m³ de manière à produire une coupe essence intermédiaire MCN au moins partiellement désulfurée ;
c) on désulfure la coupe essence lourde HHCN primaire seule en présence d'un catalyseur d'hydrodésulfuration et d'hydrogène, à une température comprise entre 200 et 450°C, à une pression comprise entre 0,5 et 8 MPa, avec une vitesse spatiale liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 50 Nm³/m³ et 1000 Nm³/m³ de manière à produire une coupe essence lourde HHCN primaire au moins partiellement désulfurée;
d) on envoie en mélange la coupe essence intermédiaire MCN primaire partiellement désulfurée n'ayant pas subi de traitement postérieur à l'étape b) et la coupe essence lourde HHCN primaire partiellement désulfurée n'ayant pas subi de traitement postérieur à l'étape c) dans une colonne de séparation de manière à séparer un flux gazeux contenant de l'hydrogène et de l'H₂S, une coupe essence intermédiaire MCN secondaire à basses teneurs en soufre et en mercaptans et une coupe essence lourde HHCN secondaire contenant des composés soufrés dont des mercaptans de recombinaison;
e) on désulfure la coupe essence lourde HHCN secondaire issue de l'étape d) contenant des composés soufrés dont des mercaptans de recombinaison en présence d'un catalyseur d'hydrodésulfuration et d'hydrogène, à une température comprise entre 200 et 450°C, à une pression comprise entre 0,5 et 8 MPa, avec une vitesse spatiale liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 50 Nm³/m³ et 1000 Nm³/m³.

Le procédé selon l'invention répond à la problématique de désulfurer une essence oléfinique tout en limitant l'hydrogénation des oléfines et en réduisant la teneur en mercaptans de recombinaison dans les effluents désulfurés, grâce à la combinaison des étapes mentionnées ci-dessus. Ainsi l'étape a) est opérée de manière à séparer une coupe essence légère à haut indice d'octane et à teneur réduite en composés soufrés sans faire intervenir une réaction catalytique d'hydrodésulfuration qui entrainerait une hydrogénation d'une partie des oléfines. L'étape a) permet en outre de séparer deux autres coupes essence complémentaires MCN et HHCN primaires qui sont respectivement traitées dans les étapes b) et c). Le traitement d'hydrodésulfuration (HDS) séparément sur chacune des coupes permet d'adapter les conditions opératoires en fonction de la coupe à traiter afin de convertir les composés soufrés tout en maitrisant la réaction d'hydrogénation des oléfines. Généralement la coupe essence intermédiaire MCN primaire contient plus des composés oléfiniques d'intérêt par rapport à la coupe essence lourde HHCN primaire. En revanche, la coupe essence intermédiaire MCN primaire contient moins de composés soufrés réfractaires à l'hydrodésulfuration que la coupe essence lourde HHCN primaire. Au cours de l'étape b) d'hydrodésulfuration de la coupe essence intermédiaire MCN primaire, des mercaptans dits "de recombinaison" se forment par réaction des oléfines de la coupe essence intermédiaire MCN primaire avec l'H₂S généré par la réaction catalytique et sont responsables de la présence de soufre dans l'effluent issu de l'étape b). Pour répondre à l'objectif de réduire la teneur mercaptans de recombinaison, le procédé selon l'invention met en oeuvre une étape d) qui consiste à envoyer directement les coupes essence intermédiaire MCN et lourde HHCN primaires hydrotraitées dans une colonne de séparation qui est configurée et opérée de manière à séparer la coupe essence intermédiaire MCN secondaire à faible teneur en soufre et en mercaptans de recombinaison. Cette étape d) permet en outre de concentrer dans une coupe essence lourde HHCN secondaire les mercaptans de recombinaison initialement présents dans la coupe essence intermédiaire MCN primaire partiellement désulfurée; les mercaptans de recombinaison ayant la particularité d'avoir des températures d'ébullition plus élevées que celles des oléfines dont ils sont issus (effet d'alourdissement). Enfin le procédé selon l'invention met en oeuvre une étape e) de désulfuration de la coupe essence lourde HHCN secondaire qui contient les mercaptans de recombinaison, qui peut être opérée dans des conditions plus sévères de manière à traiter en profondeur ladite coupe essence lourde HHCN secondaire pour convertir notamment les mercaptans de recombinaison afin de fournir un effluent à basse teneur en soufre.
On notera que le procédé selon l'invention se dispense d'étapes d'élimination de l'H₂S réalisées sur l'effluent de l'étape c) mais utilise la colonne de séparation de l'étape d). Le procédé selon l'invention est ainsi avantageux en termes d'investissement.

Dans un mode de réalisation, la colonne de séparation de l'étape d) est configurée pour séparer le flux gazeux en tête de la colonne, la coupe essence intermédiaire MCN secondaire à basses teneurs en soufre et en mercaptans par un soutirage latéral intermédiaire et la coupe essence lourde HHCN secondaire contenant des composés soufrés dont des mercaptans de recombinaison en fond de la colonne.

Alternativement, la colonne de séparation de l'étape d) est configurée pour séparer un mélange contenant de l'hydrogène, de l'H₂S et la coupe essence intermédiaire MCN secondaire en tête de la colonne et la coupe essence lourde HHCN secondaire contenant des composés soufrés dont des mercaptans de recombinaison en fond de la colonne. Le mélange soutirée en tête de la colonne est refroidi et envoyée dans une unité de séparation de manière à séparer le flux gazeux contenant de l'hydrogène et de l'H₂S et la coupe essence intermédiaire MCN secondaire à basses teneurs en soufre et en mercaptans.

Selon un mode de réalisation, la coupe essence intermédiaire MCN secondaire issue de l'étape d) et la coupe essence lourde HHCN secondaire désulfurée issue de l'étape e) sont envoyées dans une colonne de stabilisation commune.

Dans un mode de réalisation particulier, avant l'étape a) l'essence est traitée en présence d'hydrogène et d'un catalyseur d'hydrogénation sélective de manière à hydrogéner des dioléfines et réaliser une réaction d'alourdissement d'une partie des composés soufrés, l'étape a) étant opérée à une température comprise entre 50 et 250°C, à une pression comprise entre 1 et 5 MPa, avec une vitesse spatiale liquide comprise entre 0,5 et 20 h⁻¹ et avec un rapport entre le débit d'hydrogène exprimé en normaux m3 par heure et le débit de charge à traiter exprimé en m3 par heure aux conditions standards compris entre 2 Nm³/m³ et 100 Nm³/m³.

Selon l'invention, l'étape a) peut être réalisée en deux étapes de fractionnement :
a1) on fractionne l'essence en une coupe essence légère LCN et une coupe essence lourde intermédiaire HCN;
a2) on fractionne la coupe essence lourde intermédiaire HCN en au moins une coupe essence intermédiaire MCN primaire et une coupe essence lourde HHCN primaire.

Alternativement, l'étape a) est réalisée en une seule étape de fractionnement. Par exemple, l'étape a) est effectuée dans une colonne de distillation à paroi divisée.

De préférence, la coupe essence intermédiaire MCN primaire issue de l'étape b) a une différence de température ΔT entre les points à 5% et à 95% de masse distillée qui est inférieure à 75°C. La méthode utilisée pour déterminer les températures correspondant à 5% et 95% de la masse distillée est décrite dans le document Oil Gas Sci. Technol. Vol. 54 (1999), No. 4, pp. 431-438 sous le nom « CSD method » (abbréviation de "Conventional Simulated Distillation" selon la terminologie anglo-saxonne) et qui peut être traduite par "Distillation Simulée Conventionnelle".
De préférence, la différence de température ΔT entre les points à 5% et à 95% de masse distillée est comprise entre 20 et 65°C.

Selon un mode de réalisation, la coupe essence intermédiaire MCN secondaire issue de l'étape d) a la même différence de température ΔT entre les points à 5% et à 95% de masse distillée que celle de la coupe essence intermédiaire MCN primaire.

Selon un autre mode de réalisation la coupe essence intermédiaire MCN secondaire issue de l'étape d) a une différence de température ΔT entre les points à 5% et à 95% de masse distillée inférieure à celle de la coupe essence intermédiaire MCN primaire, étant entendu que ladite différence de température ΔT entre les points à 5% et à 95% de masse distillée est inférieure à 75°C.

De préférence, les catalyseurs d'hydrodésulfuration des étapes b) et c) comprennent au moins un élément du groupe VIII, au moins un élément du groupe VIb et un support.

Le procédé selon l'invention est adapté pour traiter une coupe essence issue d'une unité de craquage catalytique ou thermique.

### Description détaillée de l'invention

Les autres caractéristiques et avantages de l'invention vont apparaître à la lecture de la description qui va suivre, donnée à titre uniquement illustratif et non limitatif, et en référence aux figures suivantes:
- Figure 1 est un premier schéma de principe du procédé selon l'invention;
- Figure 2 est un schéma du procédé selon un autre mode de réalisation.

### Description de la charge

Le procédé selon l'invention permet de traiter tout type de coupe essence oléfinique contenant du soufre dont la gamme de points d'ébullition s'étend typiquement depuis environ les points d'ébullitions des hydrocarbures à 2 ou 3 atomes de carbone (C2 ou C3) jusqu'à environ 250°C, de préférence depuis environ les points d'ébullitions des hydrocarbures à 2 ou 3 atomes de carbone (C2 ou C3) jusqu'à environ 220°C, de manière plus préférée depuis environ les points d'ébullitions des hydrocarbures à 4 atomes de carbone jusqu'à environ 220°C. Le procédé selon l'invention peut aussi traiter des charges ayant des points finaux inférieurs à ceux mentionnés précédemment, tel que par exemple une coupe C5-200°C ou C5-160°C.
Le procédé selon l'invention permet de traiter de préférence une coupe essence issue d'une unité de craquage catalytique ou thermique telle que par exemple une unité de cokéfaction différée (ou « Delayed coker » selon la terminologie anglo-saxonne) ou de viscoréduction. Une charge issue du mélange de coupes issues de ces différentes provenances est également possible. De manière particulière, la coupe essence du procédé selon l'invention pourra être issue d'une unité de craquage catalytique dont la charge est prétraitée ou fonctionnant de manière à augmenter voire maximiser le rendement en propylène. Dans ce dernier cas, le mode de fonctionnement de l'unité de craquage catalytique se caractérise typiquement par des conditions opératoires sévères (haute température et avec un ratio catalyseur sur charge élevé), par l'utilisation d'un catalyseur comprenant une zéolite à sélectivité de forme (par exemple de structure cristalline MFI), avec un recycle d'une partie de la coupe essence produite ou d'un oligomérat de la coupe C4 dans l'unité de craquage catalytique, ce flux de recycle pouvant être traité soit en même temps que la charge (coprocessing selon la terminologie anglo-saxonne) soit dans un réacteur dédié afin de dissocier les conditions de craquage de la charge lourde et celles du flux recyclé (procédé dit à deux risers).
La teneur en soufre des coupes essences produites par craquage catalytique (FCC) ou non catalytique dépend de la teneur en soufre de la charge traitée, de la présence ou non d'un prétraitement de la charge, ainsi que du point final de la coupe. Généralement, les teneurs en soufre de l'intégralité d'une coupe essence, notamment celles provenant du FCC, sont supérieures à 100 ppm en poids et la plupart du temps supérieures à 500 ppm en poids. Pour des essences ayant des points finaux supérieurs à 200°C, les teneurs en soufre sont souvent supérieures à 1000 ppm en poids, elles peuvent même, dans certains cas, atteindre des valeurs de l'ordre de 4000 à 5000 ppm en poids.
Par exemple les essences issues d'unités de craquage catalytique (FCC) contiennent, en moyenne, entre 0,5% et 5% poids de dioléfines, entre 20% et 50% poids d'oléfines, entre 10 ppm et 0,5% poids de soufre dont généralement moins de 300 ppm de mercaptans. Les mercaptans se concentrent généralement dans les fractions légères de l'essence et plus précisément dans la fraction dont la température d'ébullition est inférieure à 120°C.
Les espèces soufrées contenues dans les charges traitées par le procédé de l'invention peuvent être des mercaptans ou des composés hétérocycliques, tels que par exemple les thiophènes ou les alkyl-thiophènes, ou des composés plus lourds, comme par exemple le benzothiophène. Ces composés hétérocycliques, contrairement aux mercaptans, ne peuvent pas être éliminés par les procédés extractifs. Ces composés soufrés sont par conséquent éliminés par un hydrotraitement, qui conduit à leur transformation en hydrocarbures et en H₂S.

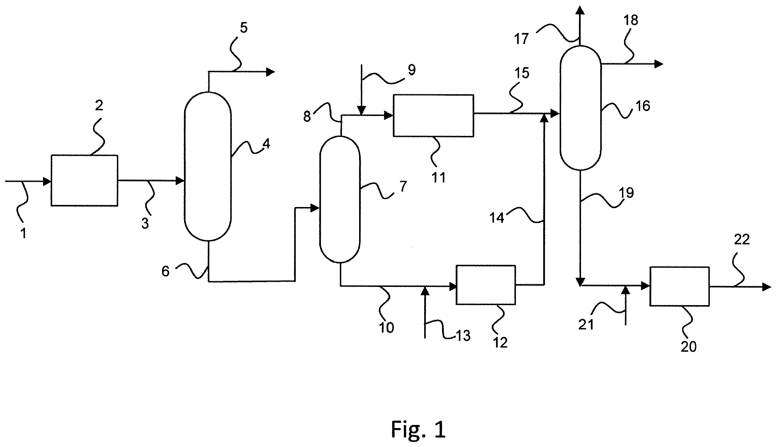

En référence à la figure 1 qui représente un mode particulier de l'invention, une charge essence oléfinique par exemple une essence de craquage catalytique décrite ci-dessus est traitée dans une étape optionnelle qui réalise l'hydrogénation sélective des dioléfines et la conversion (alourdissement) d'une partie des composés mercaptans (RSH) présents dans la charge en thioéthers, par réaction avec des oléfines. Typiquement les mercaptans qui peuvent réagir au cours de l'étape optionnelle d'hydrogénation sélective sont les suivants (liste non exhaustive): méthyl mercaptan, le mercaptan éthylique, n-propyl mercaptan, l'isopropyl mercaptan, l'iso-butylmercaptan, le tert-butyl mercaptan, le n-butylmercaptan, le secbutyl mercaptan, l'iso-amyle mercaptan, le n-amyle mercaptan, l'α-methyl-butyl mercaptan, l'α-éthylpropyl mercaptan, le n-hexyle mercaptan, le 2-mercapto-hexane. A cette fin, la charge essence FRCN est envoyée par la ligne 1 dans un réacteur catalytique d'hydrogénation sélective 2 contenant au moins un lit fixe ou mobile de catalyseur d'hydrogénation sélective des dioléfines et d'alourdissement des mercaptans. La réaction d'hydrogénation sélective des dioléfines et d'alourdissement des mercaptans s'effectue préférentiellement sur un catalyseur sulfuré comprenant au moins un élément du groupe VIII (groupes 8, 9 et 10 de la nouvelle classification périodique Handbook of Chemistry and Physics, 76ième édition, 1995-1996) et éventuellement au moins un élément du groupe VIb (groupe 6 de la nouvelle classification périodique Handbook of Chemistry and Physics, 76ième édition, 1995-1996) et un support. L'élément du groupe VIII est choisi de préférence parmi le nickel et le cobalt et en particulier le nickel. L'élément du groupe VIb, lorsqu'il est présent, est de préférence choisi parmi le molybdène et le tungstène et de manière très préférée le molybdène.
Le support du catalyseur est de préférence choisi parmi l'alumine, l'aluminate de nickel, la silice, le carbure de silicium, ou un mélange de ces oxydes. On utilise, de manière préférée, de l'alumine et de manière encore plus préférée, de l'alumine de haute pureté. Selon un mode de réalisation préféré le catalyseur d'hydrogénation sélective contient du nickel à une teneur en poids d'oxyde de nickel (sous forme NiO) comprise entre 4 et 12%, et du molybdène à une teneur en poids d'oxyde de molybdène (sous forme MoO3) comprise entre 6% et 18% et un rapport molaire nickel/molybdène compris entre 1 et 2,5, les métaux étant déposés sur un support constitué d'alumine et dont le taux de sulfuration des métaux constituant le catalyseur étant supérieur à 80%.
Lors de l'étape optionnelle d'hydrogénation sélective, l'essence est mise en contact avec le catalyseur à une température comprise entre 50°C et 250°C, et de préférence entre 80°C et 220°C, et de manière encore plus préférée entre 90°C et 200°C, avec une vitesse spatiale liquide (LHSV) comprise entre 0,5 h⁻¹ et 20 h⁻¹, l'unité de la vitesse spatiale liquide étant le litre de charge par litre de catalyseur et par heure (L/L.h). La pression est comprise entre 0,4 MPa et 5 MPa, de préférence entre 0,6 et 4 MPa et de manière encore plus préférée entre 1 et 2 MPa. L'étape optionnelle d'hydrogénation sélective est typiquement réalisée avec un rapport H₂/charge essence compris entre 2 et 100 Nm³ d'hydrogène par m³ de charge, de manière préférée entre 3 et 30 Nm³ d'hydrogène par m³ de charge.

La totalité de la charge est généralement injectée à l'entrée du réacteur. Toutefois, il peut être avantageux, dans certains cas d'injecter une fraction ou la totalité de la charge entre deux lits catalytiques consécutifs placés dans le réacteur. Ce mode de réalisation permet notamment de continuer à opérer le réacteur si l'entrée du réacteur se trouve bouchée par des dépôts de polymères, de particules, ou de gommes présentes dans la charge.
Comme indiqué sur la figure 1, l'effluent soutiré du réacteur 2 par la ligne 3 est traité selon l'étape a) du procédé à l'issue de laquelle on récupère trois coupes essence légère LCN, intermédiaire MCN primaire et lourde HHCN primaire. Dans le mode de réalisation de la figure 1, cette étape a) comprend deux sous étapes a1) et a2). L'effluent 3 est envoyée dans une colonne de fractionnement 4 (ou splitter selon la terminologie anglo-saxonne) configurée pour séparer l'essence en deux coupes : une coupe essence légère LCN 5 (ou essence légère) et une (première) coupe essence lourde HCN 6 qui est constituée par la fraction lourde complémentaire de l'essence légère LCN (étape a1). Le point d'ébullition final de la coupe légère est choisie de manière à fournir une coupe essence légère LCN à basse teneur en soufre (teneur en soufre total typiquement inférieure à 30 ppm poids et de préférence inférieure à 10 ppm poids) sans nécessiter une étape d'hydrodésulfuration ultérieure. Ainsi de préférence la coupe essence légère LCN est une coupe hydrocarbures C5⁻ (i.e. contenant des hydrocarbures ayant 5 et moins de 5 atomes de carbone par molécule). La (première) coupe essence lourde HCN qui est de préférence une coupe C6⁺ (i.e. contenant des hydrocarbures pouvant avoir 6 et plus de 6 atomes de carbone par molécule), est envoyée à l'étape a2) qui permet de fractionner ladite (première) coupe essence lourde HCN en deux coupes essence complémentaires, une coupe essence intermédiaire MCN primaire et une coupe essence lourde HHCN primaire.
L'étape a) selon l'invention est de préférence réalisée de manière à produire une coupe essence intermédiaire MCN primaire dont la différence de température (ΔT) entre les températures correspondant à 5% et à 95% de la masse distillée est inférieure ou égale à 75°C, de manière préférée comprise entre 20°C et 65°C. La température correspondant à 5% de la masse distillée de la coupe essence intermédiaire MCN primaire est de préférence comprise entre 50°C et 70°C et la température correspondant à 95% de la masse distillée de la coupe essence intermédiaire MCN primaire est de préférence comprise entre 80°C et 125°C. Par exemple la coupe essence intermédiaire MCN primaire présente une température correspondant à 5% de la masse distillée qui est égale à 65°C ± 2°C, ou égale à 60°C ± 2°C ou égale à 55°C ± 2°C. De préférence la coupe essence intermédiaire MCN primaire a une température correspondant à 95% de la masse distillée qui est égale à 120°C ± 2°C, voire égale à 115°C ± 2°C. La méthode utilisée pour déterminer les températures correspondant à 5% et 95% de la masse distillée est décrite dans le document Oil Gas Sci. Technol. Vol. 54 (1999), No. 4, pp. 431-438 sous le nom « CSD method » (abbréviation de "Conventional Simulated Distillation" selon la terminologie anglo-saxonne) et qui peut être traduite par "Distillation Simulée Conventionnelle".
Dans un mode de réalisation préféré, la coupe essence intermédiaire MCN primaire contient essentiellement des hydrocarbures ayant de 6 à 7 atomes de carbone et majoritairement des hydrocarbures avec 6 atomes de carbone.
En référence à la figure 1, la (première) coupe essence lourde HCN est envoyée dans une colonne de fractionnement 7 configurée pour séparer en tête une coupe essence intermédiaire MCN primaire qui est soutirée par la ligne 8 et en fond une coupe essence lourde HHCN primaire soutirée par la ligne 10 (étape a2).
Conformément à l'étape b) du procédé, la coupe essence intermédiaire MCN primaire 8 est traitée par hydrodésulfuration. La coupe essence intermédiaire MCN primaire est donc mise en contact avec de l'hydrogène apporté par la ligne 9 et un catalyseur d'HDS sélective dans au moins une unité d'hydrodésulfuration 11 qui comporte au moins un réacteur à lit fixe ou mobile de catalyseur. La réaction d'hydrodésulfuration est généralement réalisée à une température comprise entre 160°C et 450°C, sous une pression comprise entre 0,5 et 8 MPa. La vitesse spatiale liquide est généralement comprise entre 0,5 et 20 h⁻¹ (exprimée en volume de liquide par volume de catalyseur et par heure), de préférence comprise entre 1 et 8 h⁻¹. Le rapport H₂/coupe essence intermédiaire MCN primaire est ajusté en fonction des taux d'hydrodésulfuration désirés dans la gamme comprise entre 50 et 1000 normaux m³ par m³ aux conditions standard. De préférence, le mélange de la coupe essence intermédiaire MCN primaire avec l'hydrogène mis en contact avec le catalyseur dans l'étape b) est intégralement en phase vapeur. De préférence la température est comprise entre 200°C et 400°C, et de manière très préférée entre 200°C et 350°C. De préférence la pression est comprise entre 1 et 3 MPa.
Le catalyseur d'HDS sélective mis en oeuvre sous forme sulfurée, comprend au moins un élément du groupe VIII (groupes 8, 9 et 10 de la nouvelle classification périodique Handbook of Chemistry and Physics, 76ième édition, 1995-1996), au moins un élément du groupe VIb (groupe 6 de la nouvelle classification périodique Handbook of Chemistry and Physics, 76ième édition, 1995-1996) et un support. L'élément du groupe VIII est choisi de préférence parmi le nickel et le cobalt et en particulier le cobalt. L'élément du groupe VIb est de préférence choisi parmi le molybdène et le tungstène et de manière très préférée le molybdène. Le catalyseur pourra par exemple être un catalyseur tel que décrit dans les documents FR 2840315, FR 2840316, FR 2904242 ou FR 3023184. Le support du catalyseur est de préférence choisi parmi l'alumine, l'aluminate de nickel, la silice, le carbure de silicium, ou un mélange de ces oxydes. On utilise, de manière préférée, de l'alumine.
Il est à noter que l'hydrogène apporté par la ligne 9 peut être de l'hydrogène frais (make-up selon terminologie anglo-saxonne), soit de l'hydrogène dit "de recycle" provenant d'une étape du procédé. De préférence l'hydrogène de la ligne 9 est de l'hydrogène frais.
Au cours de cette étape b) a également lieu la réaction de formation de mercaptans de recombinaison par addition de l'H₂S formé sur les oléfines. De manière générale, les mercaptans de recombinaison ont des températures d'ébullition plus élevées que celles des oléfines dont ils sont issus. Par exemple le 2-méthyl-2-pentène (point d'ébullition en corps pur dans les conditions normales : 67°C) peut former un mercaptan de recombinaison avec 5 atomes de carbone comme le 2-méthyl-2-penthanethiol (point d'ébullition en corps pur dans les conditions normales : 125°C). Cette propriété est utilisée pour séparer les mercaptans de recombinaison de la coupe essence intermédiaire MCN primaire partiellement désulfurée conformément à l'étape d) du procédé comme expliqué ci-après. Comme indiqué sur la figure 1, l'effluent MCN primaire partiellement désulfuré, contenant des mercaptans de recombinaison, de l'hydrogène non réagi et de l'H₂S est extrait du réacteur 11 par la ligne 15. Selon l'étape c) du procédé, la coupe essence lourde HHCN primaire est également traitée par hydrodésulfuration par mise en contact avec de l'hydrogène apporté par la ligne 13 et un catalyseur d'HDS sélective dans au moins une unité d'hydrodésulfuration 12 qui comporte au moins un réacteur à lit fixe ou mobile de catalyseur. La réaction d'hydrodésulfuration est généralement réalisée à une température comprise entre 200°C et 450°C, sous une pression comprise entre 0,5 et 8 MPa. La vitesse spatiale liquide est généralement comprise entre 0,5 et 20h⁻¹ (exprimée en volume de liquide par volume de catalyseur et par heure), de préférence comprise entre 1 et 8 h⁻¹. Le rapport H2/coupe essence lourde HHCN primaire est ajusté en fonction des taux d'hydrodésulfuration désirés dans la gamme comprise entre 50 et 1000 normaux m³ par m³ aux conditions standard. De préférence, le mélange de la coupe essence lourde HHCN primaire avec l'hydrogène mis en contact avec le catalyseur dans l'étape c) est intégralement en phase vapeur. De préférence la température est comprise entre 200°C et 400°C, et de manière très préférée entre 200°C et 350°C. De préférence la pression est comprise entre 1 et 3 MPa. Le catalyseur de l'étape c) répond également à la description faite du catalyseur de l'étape b).
Etant donné que la coupe essence lourde HHCN primaire contient généralement moins d'oléfines que la coupe essence intermédiaire mais plus de composés organo-soufrés plus réfractaires, les conditions opératoires d'hydrodésulfuration à l'étape c) sont généralement plus sévères que celles de l'étape b).
Un effluent HHCN primaire partiellement désulfuré contenant de l'hydrogène non réagi, de l'H₂S et éventuellement des mercaptans de recombinaison est extrait du réacteur 12 par la ligne 14.
Conformément à l'étape d) du procédé, les effluents MCN et HHCN primaires hydrotraités issus respectivement des étapes b) et c) sont mis en contact et ensuite séparés dans une colonne de fractionnement 16. Il est à noter que les effluents hydrotraités n'ont pas subi d'étape de séparation de l'H₂S avant l'étape d).
L'étape de séparation d) est opérée de manière à fournir :
- un flux gazeux 17 contenant de l'hydrogène, de l'H₂S et éventuellement des hydrocarbures C4⁻;
- une coupe essence intermédiaire MCN secondaire désulfurée et à basse teneur en mercaptans de recombinaison 18, éventuellement stabilisée; et
- une coupe essence lourde HHCN secondaire 19 contenant des mercaptans de recombinaison.
Comme précisé plus haut, les mercaptans de recombinaison présents dans la coupe essence intermédiaire ont généralement des températures d'ébullition supérieures à celles des oléfines dont ils sont issus. Ainsi par l'étape d) judicieusement opérée, les mercaptans de recombinaison ex-MCN sont transférés dans la coupe essence lourde HHCN secondaire qui est séparée par la colonne de fractionnement 16. La colonne de fractionnement est de préférence opérée de manière à produire une coupe essence intermédiaire MCN secondaire ayant la différence de température (ΔT) entre les températures correspondant à 5% et à 95% de la masse distillée qui est inférieure ou égale à 75°C, déterminées selon la méthode décrite dans le document Oil Gas Sci. Technol. Vol. 54 (1999), No. 4, pp. 431-438 sous le nom « CSD method », et qui est égale à celle de la coupe essence intermédiaire MCN primaire.
Alternativement, l'étape d) peut être mise en oeuvre de manière à récupérer une coupe essence intermédiaire MCN secondaire dont la différence de température (ΔT) entre les températures correspondant à 5% et à 95% de la masse distillée est inférieure ou égale à 75°C, déterminées selon la méthode décrite dans le document Oil Gas Sci. Technol. Vol. 54 (1999), No. 4, pp. 431-438 sous le nom « CSD method », et qui est inférieure à celle de la coupe essence intermédiaire MCN primaire. Par exemple pour la coupe essence intermédiaire MCN secondaire, la température correspondant à 95% de la masse distillée est inférieure de 10°C par rapport à la température à 95% de la masse distillée de la coupe essence intermédiaire MCN primaire.
Selon un autre mode de réalisation (non représentée), l'étape d) est opérée dans une colonne de fractionnement configurée pour séparer :
- en tête de la colonne une phase gazeuse contenant des hydrocarbures de la coupe essence intermédiaire MCN secondaire, de l'hydrogène non réagi et de l'H₂S ;
- la coupe essence lourde HHCN secondaire contenant des mercaptans de recombinaison qui est soutirée en fond de la colonne.
La phase gazeuse soutirée en tête de la colonne est alors traitée afin de condenser la coupe essence intermédiaire MCN secondaire. A cette fin, ladite phase gazeuse est refroidie au moyen d'une unité froide et l'effluent refroidi est ensuite envoyé à un ballon séparateur permettant de récupérer un flux gazeux contenant essentiellement de l'hydrogène et de l'H₂S avec éventuellement des hydrocarbures C4⁻ et une phase hydrocarbures liquide correspondant à la coupe essence intermédiaire MCN épurée en H₂ et H₂S.
En référence à la figure 1, la coupe essence lourde HHCN secondaire 19 récupérée en fond de la colonne de fractionnement 16 est traitée selon l'étape e) par hydrodésulfuration qui vise notamment à convertir les mercaptans de recombinaison. A cette fin, ladite coupe essence lourde HHCN secondaire est mise en contact avec de l'hydrogène apporté par la ligne 21 et un catalyseur d'HDS sélective dans au moins une unité d'hydrodésulfuration 20 qui comporte au moins un réacteur à lit fixe ou mobile de catalyseur. La réaction d'hydrodésulfuration est généralement réalisée à une température comprise entre 200°C et 450°C, sous une pression comprise entre 0,5 et 8 MPa. La vitesse spatiale liquide est généralement comprise entre 0,5 et 20 h⁻¹ (exprimée en volume de liquide par volume de catalyseur et par heure), de préférence comprise entre 1 et 8 h⁻¹. Le rapport H2/coupe essence lourde HHCN secondaire est ajusté en fonction des taux d'hydrodésulfuration désirés dans la gamme comprise entre 50 et 1000 normaux m³ par m³ aux conditions standard. De préférence, le mélange de la première coupe essence lourde HCN avec l'hydrogène mis en contact avec le catalyseur dans l'étape e) est intégralement en phase vapeur. De préférence la température est comprise entre 200°C et 400°C, et de manière très préférée entre 200°C et 350°C. De préférence la pression est comprise entre 1 et 3 MPa. Le catalyseur mis en oeuvre à l'étape e) répond de préférence à la description des catalyseurs des étapes b) et/ou c). Cependant, les catalyseurs des étapes b), c) et e) peuvent avoir des formulations différentes tout en répondant à la description ci-dessus.
L'effluent HHCN secondaire désulfuré 22 extrait de l'unité d'hydrodésulfuration 20 est avantageusement envoyé dans une colonne de stabilisation afin de séparer l'hydrogène, l'H₂S et les composés hydrocarbures C4⁻. Selon un mode de réalisation, la coupe essence intermédiaire MCN secondaire issue de l'étape d) est également envoyée dans la même colonne de stabilisation.
Typiquement, les coupes essence MCN et HHCN secondaires issues respectivement des étapes d) et e) ont des teneurs en soufre total inférieures à 30 ppm poids, de préférence inférieure à 15 ppm poids et de manière plus préférée inférieure à 10 ppm poids de soufre total. Par ailleurs la teneur en mercaptans des coupes essence MCN et HHCN secondaires issues respectivement des étapes d) et e), exprimée en équivalent soufre, est inférieure à 10 ppm poids.

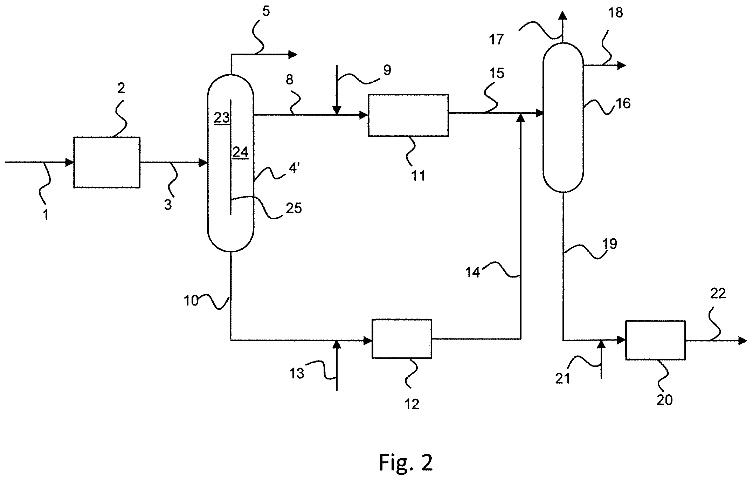

La figure 2 représente un autre mode de réalisation du procédé selon l'invention différant de celui de la figure 1 par le fait que l'étape a) de fractionnement de l'essence en trois coupes peut être réalisé en une seule étape avec une seule colonne. De préférence ladite colonne de distillation est une colonne de distillation à paroi divisée ou "Divided Wall Column" selon la terminologie anglo-saxonne. Ce type de colonne est bien décrit dans la littérature par exemple dans la publication Chemical Engineering and Processing, 49 (2010) pp 559-580. A titre d'exemple, ce type de colonne permet de séparer trois produits de volatilité différente dans une seule colonne de fractionnement au lieu de mettre en oeuvre deux colonnes en série, ce qui permet d'économiser en coûts d'énergie et d'investissements. Les documents US 2003/0116474 A1, US 6,927,314 B1 et US 7,947,860 B2 illustrent des applications de ce type de colonne pour fractionner des essences en au moins 3 coupes.
Le principe d'une colonne à paroi divisée est d'installer à l'intérieur d'une colonne de fractionnement, une paroi verticale dans une partie médiane verticale de la colonne. Cette paroi de séparation se prolonge entre les côtés opposés de la surface intérieure de la colonne. Un joint installé entre la paroi verticale et la surface intérieure de la colonne assure l'étanchéité de la paroi divisée de sorte que les fluides ne peuvent pas passer horizontalement d'un côté à l'autre de la colonne. La paroi verticale intérieure divise la partie centrale de la colonne en deux zones ou chambres de fractionnement parallèles (équivalentes à deux colonnes de fractionnement). Chaque zone de fractionnement peut contenir des équipements classiques de mise en contact vapeur-liquide tels que des plateaux, des garnissages ou les deux, selon le design de la colonne.
Dans le mode de réalisation de la figure 2, la colonne à paroi divisée comprend deux chambres de fractionnement 23 et 24 séparées par une paroi verticale de partition 25 agencée dans une section centrale de la colonne qui s'étend à la fois sur une portion de la section de rectification et sur une portion de la section d'épuisement de la colonne. De la colonne de distillation à paroi divisée 4', on soutire directement la coupe essence légère LCN 5 en tête de colonne, la coupe essence lourde HHCN primaire 10 en fond de colonne et la coupe essence intermédiaire MCN primaire 8 au moyen d'un soutirage latéral situé dans la chambre de fractionnement 24.

### Exemple

Le tableau 1 présente les caractéristiques d'une essence FCC traitée par le procédé selon la figure 1 de la présente invention. Dans cet exemple on présente des résultats sans la mise en oeuvre optionnelle du réacteur d'hydrogénation sélective 2.

Une essence FRCN 1 est fractionnée pour obtenir une coupe essence légère LCN et une coupe essence lourde intermédiaire HCN 6 qui est ensuite fractionnée, comme proposé selon l'invention, en une coupe essence intermédiaire MCN primaire 8 et une essence lourde HHCN secondaire 10.

Les méthodes d'analyse utilisées pour caractériser les charges et effluents sont les suivantes :
- Masse volumique selon la méthode NF EN ISO 12185
- Teneur en soufre selon la méthode ASTM D2622 pour les teneurs supérieures à 10 ppm S et ISO 20846 pour les teneurs inférieures à 10 ppm S.
- Teneur en mercaptans selon la méthode ASTM D3227.
- Distillation selon la méthode CSD distillation simulée « CSD » décrite dans le document Oil Gas Sci. Technol. Vol. 54 (1999), No. 4, pp. 431-438.

**Tableau 1 : Caractéristiques des coupes FCC HCN, MCN primaire et HHCN primaire de la Figure 1**

| | Ligne 6 HCN | Ligne 8 Essence intermédiaire MCN primaire | Ligne 10 Essence lourde primaire HHCN |
|---|---|---|---|
| Masse volumique à 15°C (g/cm³) | 0.795 | 0.711 | 0.82 |
| Teneur en soufre organique (ppm S) | 1279 | 481 | 1543 |
| Teneur en mercaptans (ppm S) | 13 | 23 | 10 |

| Distillation Simulée | | | |
|---|---|---|---|
| 5% masse distillée (°C) | 69 | 58 | 100 |
| 10% masse distillée (°C) | 74 | 62 | 111 |
| 30% masse distillée (°C) | 113 | 72 | 140 |
| 50% masse distillée (°C) | 143 | 75 | 162 |
| 70% masse distillée (°C) | 172 | 83 | 182 |
| 90% masse distillée (°C) | 207 | 96 | 208 |
| 95% masse distillée (°C) | 220 | 100 | 218 |
| 99.5% masse distillée (°C) | 235 | 104 | 233 |

Selon l'exemple de la figure 1, la coupe essence intermédiaire MCN primaire est une coupe dont la température à 5% de masse distillé est de 58°C et la température à 95% de masse distillée est de 100°C (points déterminés selon la méthode de distillation simulée « CSD » décrite dans la littérature scientifique (Oil Gas Sci. Technol. Vol. 54 (1999), No. 4, pp. 431-438). Pour cette coupe essence intermédiaire MCN primaire, la différence de température 5 entre les points à 5% et à 95% de masse distillée est de 42°C.

Comme indiqué dans l'exemple de la figure 1, la coupe essence intermédiaire MCN primaire est mélangée avec de l'hydrogène et traitée dans une unité d'hydrodésulfuration sélective (réacteur 11) en présence d'un catalyseur CoMo supporté sur alumine (HR806 vendu par la société Axens). La température est de 240°C, la pression est de 2 MPa, la vitesse spatiale liquide (exprimée en volume de liquide par volume de catalyseur et par heure) est 4 h⁻¹, le rapport H₂/coupe MCN primaire est de 360 normaux m³ par m³ dans les conditions standards.

Les caractéristiques de la coupe essence intermédiaire MCN primaire partiellement désulfurée sont indiquées dans le Tableau 2.

La coupe essence lourde HHCN primaire est mélangée avec de l'hydrogène et traitée dans une unité d'hydrodésulfuration sélective (réacteur 12) en présence d'un catalyseur CoMo supporté sur alumine (HR806 vendu par la société Axens). La température est de 260°C, la pression est de 2 MPa, la vitesse spatiale liquide (exprimée en volume de liquide par volume de catalyseur et par heure) est 4 h⁻¹, le rapport H₂/coupe essence lourde HHCN est de 360 normaux m³ par m³ dans les conditions standards. Les caractéristiques de l'essence lourde HHCN primaire partiellement désulfurée sont également indiquées dans le Tableau 2.

La coupe essence intermédiaire MCN primaire partiellement désulfurée (ligne 15) est mélangée avec la coupe essence lourde HHCN primaire partiellement désulfurée et envoyée dans une colonne de fractionnement (16) (selon l'étape d) de l'invention) dont on a fixé le point de coupe à 100°C.

La coupe essence intermédiaire MCN secondaire à faible teneur en soufre et en mercaptans de recombinaison (ligne 18) est soutirée en haut de la colonne de fractionnement 16. Les caractéristiques de l'essence intermédiaire MCN secondaire à faible teneur en soufre et en mercaptans de recombinaison (stabilisée) sont indiquées dans le Tableau 2.

L'étape de fractionnement d) permet très avantageusement de récupérer la plupart des mercaptans de recombinaison avec la coupe essence lourde HHCN secondaire soutirée en fond de la colonne de fractionnement 16. Cette essence lourde HHCN secondaire contenant des composés soufrés dont des mercaptans de recombinaison est désulfurée dans cet exemple en présence d'un catalyseur d'hydrodésulfuration sélective (réacteur 20) en présence d'un catalyseur CoMo supporté sur alumine (HR806 vendu par la société Axens). La température est de 262°C, la pression est de 2 MPa, la vitesse spatiale liquide (exprimée en volume de liquide par volume de catalyseur et par heure) est 2.7 h-1, le rapport H2/coupe HHCN lourde soutirée en fond de la colonne 16 est de 360 normaux m3 par m3 dans les conditions standards. Les caractéristiques de la coupe essence lourde HHCN désulfurée (ligne 22) sont indiquées dans le Tableau 2.

**Tableau 2 : Caractéristiques des coupes essence intermédiaire MCN primaire, essence intermédiaire MCN secondaire et essence lourde HHCN désulfurée selon la Figure 1**

| | Teneur en soufre organique (ppm S) | Teneur en mercaptans (ppm S) | Indice de brome (g/100g) | Température à 5% de masse distillée | Température à 95% de masse distillée |
|---|---|---|---|---|---|
| Ligne 15 Essence intermédiaire MCN primaire partiellement désulfurée | 104 | 98 | 87 | 58 | 100 |
| Ligne 18 Essence intermédiaire MCN secondaire à faible teneur en soufre et en mercaptans | 10 | 4 | 87 | 58 | 98 |
| Ligne 22 Essence lourde HHCN secondaire désulfurée | 11 | 9 | 24 | 98 | 218 |

Le procédé selon l'invention permet ainsi de produire une essence intermédiaire après les étapes d'hydrodésulfuration (étape b) et de fractionnement (étape d) à basse teneur en soufre total et avec une teneur en mercaptans inférieure à 10 ppm poids exprimée en équivalent soufre et cela en limitant l'hydrogénation des oléfines.

Avant l'étape d'hydrodésulfuration, la coupe essence intermédiaire MCN primaire a une teneur en soufre organique de 481 ppm poids soufre dont 13 ppm poids soufre de mercaptans. L'effluent MCN primaire après l'étape de désulfuration présente une teneur en soufre organique de 104 ppm soufre. La majeure partie du soufre organique est sous forme de mercaptans de recombinaison (98 ppm soufre).

Grâce à l'étape d) de fractionnement qui est réalisée judicieusement de manière à conserver un intervalle de distillation étroit pour la coupe intermédiaire MCN secondaire, on obtient une essence intermédiaire MCN secondaire qui est à la fois à basse teneur en soufre organique (10 ppm poids soufre) et en mercaptans (4 ppm poids soufre).

La coupe essence intermédiaire MCN secondaire possède une différence de température (ΔT) entre les températures correspondant à 5% et à 95% de la masse distillée de 40°C qui est inférieure à celle de la coupe essence intermédiaire MCN primaire (42°C).

Le procédé selon l'invention permet ainsi de répondre à deux contraintes à savoir fournir une coupe essence à basse teneur en mercaptans (de recombinaison) et sans perte d'indice d'octane.

## Revendications

1. Procédé de traitement d'une essence contenant des composés soufrés, des oléfines et des dioléfines, comprenant les étapes suivantes:
a) on fractionne l'essence en au moins :
• une coupe essence légère LCN;
• une coupe essence intermédiaire MCN primaire; et
• une coupe essence lourde HHCN primaire;
b) on désulfure la coupe essence intermédiaire MCN primaire seule et en présence d'un catalyseur d'hydrodésulfuration et de l'hydrogène, à une température comprise entre 160 et 450°C, à une pression comprise entre 0,5 et 8 MPa, avec une vitesse spatiale liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 50 Nm³/m³ et 1000 Nm³/m³ de manière à produire une coupe essence intermédiaire MCN primaire au moins partiellement désulfurée ;
c) on désulfure la coupe essence lourde HHCN primaire seule et en présence d'un catalyseur d'hydrodésulfuration et d'hydrogène, à une température comprise entre 200 et 450°C, à une pression comprise entre 0,5 et 8 MPa, avec une vitesse spatiale liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 50 Nm³/m³ et 1000 Nm³/m³ de manière à produire une coupe lourde HHCN primaire au moins partiellement désulfurée;
d) on envoie en mélange la coupe essence intermédiaire MCN primaire partiellement désulfurée n'ayant pas subi de traitement postérieur à l'étape b) et la coupe lourde HHCN primaire partiellement désulfurée n'ayant pas subi de traitement postérieur à l'étape c) dans une colonne de séparation de manière à séparer un flux gazeux contenant de l'hydrogène et de l'H₂S, une coupe essence intermédiaire MCN secondaire à basses teneurs en soufre et en mercaptans et une coupe essence lourde HHCN secondaire contenant des composés soufrés dont des mercaptans de recombinaison;
e) on désulfure la coupe essence lourde HHCN secondaire issue de l'étape d) contenant des composés soufrés dont des mercaptans de recombinaison en présence d'un catalyseur d'hydrodésulfuration et d'hydrogène, à une température comprise entre 200 et 450°C, à une pression comprise entre 0,5 et 8 MPa, avec une vitesse spatiale liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 50 Nm³/m³ et 1000 Nm³/m³.

2. Procédé selon la revendication 1, dans lequel la colonne de séparation de l'étape d) est configurée pour séparer le flux gazeux en tête de la colonne, la coupe essence intermédiaire MCN secondaire à basses teneurs en soufre et en mercaptans par un soutirage latéral intermédiaire et la coupe essence lourde HHCN secondaire contenant des composés soufrés dont des mercaptans de recombinaison en fond de la colonne.

3. Procédé selon la revendication 1, dans lequel la colonne de séparation de l'étape d) est configurée pour séparer un mélange contenant de l'hydrogène, de l'H₂S et la coupe essence intermédiaire MCN secondaire en tête de la colonne et la coupe essence lourde HHCN secondaire contenant des composés soufrés dont des mercaptans de recombinaison en fond de la colonne et dans lequel ledit mélange est refroidi et envoyée dans une unité de séparation de manière à séparer le flux gazeux contenant de l'hydrogène et de l'H₂S et la coupe essence intermédiaire secondaire MCN à basses teneurs en soufre et en mercaptans.

4. Procédé selon l'une des revendications précédentes, dans lequel avant l'étape a) l'essence est traitée en présence d'hydrogène et d'un catalyseur d'hydrogénation sélective de manière à hydrogéner des dioléfines et réaliser une réaction d'alourdissement d'une partie des composés soufrés, l'étape a) étant opérée à une température comprise entre 50 et 250°C, à une pression comprise entre 1 et 5 MPa, avec une vitesse spatiale liquide comprise entre 0,5 et 20 h⁻¹ et avec un rapport entre le débit d'hydrogène exprimé en normaux m³ par heure et le débit de charge à traiter exprimé en m³ par heure aux conditions standards compris entre 2 Nm³/m³ et 100 Nm³/m³.

5. Procédé selon l'une des revendications précédentes, dans lequel l'étape a) est réalisée en deux étapes de fractionnement :
a1) on fractionne l'essence en une coupe essence légère LCN et une coupe essence lourde intermédiaire HCN;
a2) on fractionne la coupe essence lourde intermédiaire HCN en au moins une coupe essence intermédiaire MCN primaire et une coupe essence lourde HHCN primaire.

6. Procédé selon l'une des revendications 1 à 4, dans lequel l'étape a) est réalisée en une seule étape de fractionnement.

7. Procédé selon la revendication 6, dans lequel l'étape a) est effectuée dans une colonne de distillation à paroi divisée.

8. Procédé selon l'une des revendications précédentes, dans lequel la coupe essence intermédiaire MCN primaire issue de l'étape b) a une différence de température ΔT entre les points à 5% et à 95% de masse distillée qui est inférieure à 75°C.

9. Procédé selon la revendication 8, dans lequel la différence de température ΔT entre les points à 5% et à 95% de masse distillée est comprise entre 20 et 65°C.

10. Procédé selon l'une des revendications 8 ou 9, dans lequel la coupe essence intermédiaire MCN secondaire issue de l'étape d) a la même différence de température ΔT entre les points à 5% et à 95% de masse distillée que celle de la coupe essence intermédiaire MCN primaire.

11. Procédé selon l'une des revendications 8 ou 9, dans lequel la coupe essence intermédiaire MCN secondaire issue de l'étape d) a une différence de température ΔT entre les points à 5% et à 95% de masse distillée inférieure à celle de la coupe essence intermédiaire MCN primaire, étant entendu que ladite différence de température ΔT entre les points à 5% et à 95% de masse distillée est inférieure à 75°C.

12. Procédé selon l'une des revendications précédentes, dans lequel les catalyseurs d'hydrodésulfuration des étapes b) et c) comprennent au moins un élément du groupe VIII, au moins un élément du groupe VIb et un support.

13. Procédé selon l'une des revendications précédentes, dans lequel la coupe essence intermédiaire MCN secondaire issue de l'étape d) et la coupe essence lourde HHCN secondaire désulfurée issue de l'étape e) sont envoyées dans une colonne de stabilisation commune.

14. Procédé selon l'une des revendications précédentes, dans lequel la coupe essence est issue d'une unité de craquage catalytique ou thermique.

## Patentansprüche

1. Verfahren zur Behandlung eines Benzins, das Schwefel-, Olefin- und Diolefinverbindungen enthält, umfassend die folgenden Schritte:
a) das Benzin wird fraktioniert in mindestens:
• eine leichte Benzinfraktion LCN;
• eine primäre Zwischenbenzinfraktion MCN; und
• eine primäre schwere Benzinfraktion HHCN;
b) die primäre Zwischenbenzinfraktion MCN wird allein und in Anwesenheit eines Hydroentschwefelungskatalysators und von Wasserstoff entschwefelt, bei einer Temperatur zwischen 160 und 450 °C, bei einem Druck zwischen 0,5 und 8 MPa, mit einer Raumgeschwindigkeit der Flüssigkeit pro Stunde zwischen 0,5 und 20 h⁻¹ und mit einem Verhältnis zwischen dem Durchsatz von Wasserstoff, ausgedrückt in normalen m³ pro Stunde, und dem Durchsatz der zu behandelnden Charge, ausgedrückt in m³ pro Stunde, bei Standardbedingungen zwischen 50 Nm³/m³ und 1000 Nm³/m³, um eine mindestens teilweise entschwefelte primäre Zwischenbenzinfraktion MCN zu erzeugen;
c) die primäre schwere Benzinfraktion HHCN wird allein und in Anwesenheit eines Hydroentschwefelungskatalysators und von Wasserstoff entschwefelt, bei einer Temperatur zwischen 200 und 450 °C, bei einem Druck zwischen 0,5 und 8 MPa, mit einer Raumgeschwindigkeit der Flüssigkeit pro Stunde zwischen 0,5 und 20 h⁻¹ und mit einem Verhältnis zwischen dem Durchsatz von Wasserstoff, ausgedrückt in normalen m³ pro Stunde, und dem Durchsatz der zu behandelnden Charge, ausgedrückt in m³ pro Stunde, bei Standardbedingungen zwischen 50 Nm³/m³ und 1000 Nm³/m³, um eine mindestens teilweise entschwefelte primäre schwere Benzinfraktion HHCN zu erzeugen;
d) eine Mischung der teilweise entschwefelten primären Zwischenbenzinfraktion MCN, die keiner Behandlung nach Schritt b) unterzogen wurde, und der teilweise entschwefelten primären schweren Benzinfraktion HHCN, die keiner Behandlung nach Schritt c) unterzogen wurde, wird in eine Trennsäule geschickt, um einen Gasstrom, der Wasserstoff und H₂S enthält, eine sekundäre Zwischenbenzinfraktion MCN mit geringem Gehalt an Schwefel und an Mercaptanen und eine sekundäre schwere Benzinfraktion HHCN, die Schwefelverbindungen, darunter Mercaptane aus einer Rekombination, enthält, zu trennen;
e) die sekundäre schwere Benzinfraktion HHCN aus Schritt d), die Schwefelverbindungen, darunter Mercaptane aus einer Rekombination, enthält, wird in Anwesenheit eines Hydroentschwefelungskatalysators und von Wasserstoff entschwefelt, bei einer Temperatur zwischen 200 und 450 °C, bei einem Druck zwischen 0,5 und 8 MPa, mit einer Raumgeschwindigkeit der Flüssigkeit pro Stunde zwischen 0,5 und 20 h⁻¹ und mit einem Verhältnis zwischen dem Durchsatz von Wasserstoff, ausgedrückt in normalen m³ pro Stunde, und dem Durchsatz der zu behandelnden Charge, ausgedrückt in m³ pro Stunde, bei Standardbedingungen zwischen 50 Nm³/m³ und 1000 Nm³/m³.

2. Verfahren nach Anspruch 1, wobei die Trennsäule in Schritt d) ausgelegt ist, den Gasstrom am Kopf der Säule, die sekundäre Zwischenbenzinfraktion MCN mit geringem Gehalt an Schwefel und an Mercaptanen durch ein seitliches Zwischenabziehen und die sekundäre schwere Benzinfraktion HHCN, die Schwefelverbindungen, darunter Mercaptane aus einer Rekombination, enthält, am Boden der Säule zu trennen.

3. Verfahren nach Anspruch 1, wobei die Trennsäule von Schritt d) ausgelegt ist, eine Mischung, enthaltend Wasserstoff, H₂S und die sekundäre Zwischenbenzinfraktion MCN, am Kopf der Säule und die sekundäre schwere Benzinfraktion HHCN, die Schwefelverbindungen, darunter Mercaptane aus einer Rekombination, enthält, am Boden der Säule zu trennen, und wobei die Mischung abgekühlt wird und in eine Trenneinheit geschickt wird, um den Gasstrom, der Wasserstoff und H₂S enthält, und die sekundäre Zwischenbenzinfraktion MCN mit geringem Gehalt an Schwefel und an Mercaptanen zu trennen.

4. Verfahren nach einem der vorhergehenden Ansprüche, wobei vor dem Schritt a) das Benzin in Anwesenheit eines Hydroentschwefelungskatalysators selektiv getrennt wird, um die Diolefine zu hydrieren, und um eine Reaktion durchzuführen, um einen Teil der Schwefelverbindungen schwerer zu machen, wobei der Schritt a) bei einer Temperatur zwischen 50 und 250 °C, bei einem Druck zwischen 1 und 5 MPa, mit einer Raumgeschwindigkeit der Flüssigkeit pro Stunde zwischen 0,5 und 20 h⁻¹ und mit einem Verhältnis zwischen dem Durchsatz von Wasserstoff, ausgedrückt in normalen m³ pro Stunde, und dem Durchsatz der zu behandelnden Charge, ausgedrückt in m³ pro Stunde, bei Standardbedingungen zwischen 2 Nm³/m³ und 100 Nm³/m³ betrieben wird.

5. Verfahren nach einem der vorhergehenden Ansprüche, wobei der Schritt a) in zwei Fraktionierungsschritten durchgeführt wird:
a1) das Benzin wird in eine leichte Benzinfraktion LCN und eine schwere Zwischenbenzinfraktion HCN fraktioniert;
a2) die schwere Zwischenbenzinfraktion HCN wird in mindestens eine primäre Zwischenbenzinfraktion MCN und eine primäre schwere Benzinfraktion HHCN fraktioniert.

6. Verfahren nach einem der Ansprüche 1 bis 4, wobei der Schritt a) in einem einzigen Fraktionierungsschritt durchgeführt wird.

7. Verfahren nach Anspruch 6, wobei der Schritt a) in einer Destillationssäule mit geteilter Wand bewirkt wird.

8. Verfahren nach einem der vorhergehenden Ansprüche, wobei die primäre Zwischenbenzinfraktion MCN aus Schritt b) eine Temperaturdifferenz ΔT zwischen den Punkten bei 5 % und bei 95 % der destillierten Masse aufweist, die kleiner ist als 75 °C.

9. Verfahren nach Anspruch 8, wobei die Temperaturdifferenz ΔT zwischen den Punkten bei 5 % und bei 95 % der destillierten Masse zwischen 20 und 65 °C liegt.

10. Verfahren nach einem der Ansprüche 8 oder 9, wobei die sekundäre Zwischenbenzinfraktion MCN aus Schritt d) dieselbe Temperaturdifferenz ΔT zwischen den Punkten bei 5 % und bei 95 % der destillierten Masse aufweist wie jene der primären Zwischenbenzinfraktion MCN.

11. Verfahren nach einem der Ansprüche 8 oder 9, wobei die sekundäre Zwischenbenzinfraktion MCN aus Schritt d) eine Temperaturdifferenz ΔT zwischen den Punkten bei 5 % und bei 95 % der destillierten Masse aufweist, die kleiner ist als jene der primären Zwischenbenzinfraktion MCN, mit der Maßgabe, dass die Temperaturdifferenz ΔT zwischen den Punkten bei 5 % und bei 95 % der destillierten Masse kleiner ist als 75 °C.

12. Verfahren nach einem der vorhergehenden Ansprüche, wobei die Hydroentschwefelungskatalysatoren der Schritte b) und c) mindestens ein Element der Gruppe VIII, mindestens ein Element der Gruppe Vlb und einen Träger umfassen.

13. Verfahren nach einem der vorhergehenden Ansprüche, wobei die sekundäre Zwischenbenzinfraktion MCN aus Schritt b) und die entschwefelte sekundäre schwere Benzinfraktion HHCN aus Schritt e) in eine gemeinsame Stabilisierungssäule geschickt werden.

14. Verfahren nach einem der vorhergehenden Ansprüche, wobei die Benzinfraktion aus einer katalytischen oder thermischen Krack-Einheit stammt.

## Claims

1. A process for the treatment of a gasoline containing sulphur-containing compounds, olefins and diolefins, comprising the following steps:
a) fractionating the gasoline into at least:
• a light gasoline cut LCN;
• a primary intermediate gasoline cut, MCN; and
• a primary heavy gasoline cut HHCN;
b) desulphurizing the primary intermediate gasoline cut MCN alone and in the presence of a hydrodesulphurization catalyst and hydrogen, at a temperature in the range 160°C to 450°C, at a pressure in the range 0.5 to 8 MPa, with a liquid space velocity in the range 0.5 to 20 h⁻¹ and with a ratio between the flow rate of hydrogen, expressed in normal m³ per hour, and the flow rate of feed to be treated, expressed in m³ per hour under standard conditions, in the range 50 Nm³/m³ to 1000 Nm³/m³ in a manner such as to produce an at least partially desulphurized primary intermediate gasoline cut MCN;
c) desulphurizing the primary heavy gasoline cut HHCN alone and in the presence of a hydrodesulphurization catalyst and hydrogen, at a temperature in the range 200°C to 450°C, at a pressure in the range 0.5 to 8 MPa, with a liquid space velocity in the range 0.5 to 20 h⁻¹ and with a ratio between the flow rate of hydrogen, expressed in normal m³ per hour, and the flow rate of feed to be treated, expressed in m³ per hour under standard conditions, in the range 50 Nm³/m³ to 1000 Nm³/m³ in a manner such as to produce an at least partially desulphurized primary heavy gasoline cut HHCN;
d) sending, as a mixture, the partially desulphurized primary intermediate gasoline cut MCN which has not undergone treatment following step b) and the partially desulphurized primary heavy cut HHCN which has not undergone treatment following step c) to a separation column in order to separate a gaseous stream containing hydrogen and H₂S, a secondary intermediate gasoline cut MCN with low sulphur and mercaptans contents and a secondary heavy gasoline cut HHCN containing sulphur-containing compounds including recombinant mercaptans;
e) desulphurizing the secondary heavy gasoline cut HHCN obtained from step d) containing sulphur-containing compounds including recombinant mercaptans in the presence of a hydrodesulphurization catalyst and hydrogen, at a temperature in the range 200°C to 450°C, at a pressure in the range 0.5 to 8 MPa, with a liquid space velocity in the range 0.5 to 20 h⁻¹ and with a ratio between the flow rate of hydrogen, expressed in normal m³ per hour, and the flow rate of feed to be treated, expressed in m³ per hour under standard conditions, in the range 50 Nm³/m³ to 1000 Nm³/m³.

2. The process as claimed in claim 1, in which the separation column of step d) is configured to separate the gaseous stream from the head of the column, the secondary intermediate gasoline cut MCN with low sulphur contents and mercaptans contents via an intermediate side stream and the secondary heavy gasoline cut HHCN containing sulphur-containing compounds including recombinant mercaptans from the bottom of the column.

3. The process as claimed in claim 1, in which the separation column of step d) is configured to separate a mixture containing hydrogen, H₂S and the secondary intermediate gasoline cut MCN from the head of the column and the secondary heavy gasoline cut HHCN containing sulphur-containing compounds including recombinant mercaptans from the bottom of the column, and in which said mixture is cooled and sent to a separation unit in order to separate the gaseous stream containing hydrogen and H₂S and the secondary intermediate gasoline cut MCN with low sulphur and mercaptans contents.

4. The process as claimed in one of the preceding claims in which, before step a), the gasoline is treated in the presence of hydrogen and a selective hydrogenation catalyst in a manner such as to hydrogenate diolefins and carry out a molecular weight-increasing reaction on a portion of the sulphur-containing compounds, step a) being operated at a temperature in the range 50°C to 250°C, at a pressure in the range 1 to 5 MPa, with a liquid space velocity in the range 0.5 to 20 h⁻¹ and with a ratio between the flow rate of hydrogen, expressed in normal m³ per hour, and the flow rate of feed to be treated, expressed in m³ per hour under standard conditions, in the range 2 Nm³/m³ to 100 Nm³/m³.

5. The process as claimed in one of the preceding claims, in which step a) is carried out in two fractionation steps:
a1) fractionating the gasoline into a light gasoline cut LCN and an intermediate heavy gasoline cut HCN;
a2) fractionating the intermediate heavy gasoline cut HCN into at least one primary intermediate gasoline cut MCN and a primary heavy gasoline cut HHCN.

6. The process as claimed in one of claims 1 to 4, in which step a) is carried out in a single fractionation step.

7. The process as claimed in claim 6, in which step a) is carried out in a divided wall distillation column.

8. The process as claimed in one of the preceding claims, in which the primary intermediate gasoline cut MCN obtained from step b) has a temperature difference ΔT between the 5% and 95% distilled weight points which is less than 75°C.

9. The process as claimed in claim 8, in which the difference in temperature ΔT between the 5% and 95% distilled weight points is in the range 20°C to 65°C.

10. The process as claimed in claim 8 or claim 9, in which the secondary intermediate gasoline cut MCN obtained from step d) has the same temperature difference ΔT between the 5% and 95% distilled weight points as that for the primary intermediate gasoline cut MCN.

11. The process as claimed in claim 8 or claim 9, in which the secondary intermediate gasoline cut MCN obtained from step d) has a temperature difference ΔT between the 5% and 95% distilled weight points which is less than that for the primary intermediate gasoline cut MCN, it being understood that said temperature difference ΔT between the 5% and 95% distilled weight points is less than 75°C.

12. The process as claimed in one of the preceding claims, in which the hydrodesulphurization catalysts of steps b) and c) comprise at least one element from group VIII, at least one element from group VIb and a support.

13. The process as claimed in one of the preceding claims, in which the secondary intermediate gasoline cut MCN obtained from step d) and the desulphurized secondary heavy gasoline cut HHCN obtained from step e) are sent to a communal stabilization column.

14. The process as claimed in one of the preceding claims, in which the gasoline cut is obtained from a catalytic cracking or thermal cracking unit.
